# EUROPEAN PATENT APPLICATION

(11) **EP 4 284 063 A1**
(43) Date of publication of application: **29.11.2023**
(21) Application number: 22742230.0
(22) Date of filing: 21.01.2022
(51) Int. Cl.: H04W 36/00

(54) **PATH SWITCHING METHOD, TERMINAL AND NETWORK SIDE DEVICE**

(30) Priority: 25.01.2021 CN 202110100043
(71) Applicant: Vivo Mobile Communication Co., Ltd., Dongguan, Guangdong 523863 (CN)
(72) Inventor: SUN, Peng, Dongguan, Guangdong 523863 (CN); YANG, Xiaodong, Dongguan, Guangdong 523863 (CN); JI, Zichao, Dongguan, Guangdong 523863 (CN); ZHENG, Qian, Dongguan, Guangdong 523863 (CN)
(74) Representative: Lavoix
(86) International application number: PCT/CN2022/073060
(87) International publication number: WO 2022/156751

(57) **Abstract**

Embodiments of this application disclose a path switching method, a terminal, and a network side device, and pertain to the field of wireless communication technologies. The method includes: switching, by a first terminal, between at least two paths in a case that a first condition is met, where the first condition includes at least one of the following: a path switching indication sent by a network side device is received, where the path switching indication is used to instruct the first terminal to switch between the at least two paths; a path switching request is sent to the network side device, where the path switching request is used to request the network side device to switch the first terminal between the at least two paths; a prescribed signal is detected, where the prescribed signal is a signal corresponding to a target path, and the target path is one of the at least two paths; a signal detection result corresponding to the prescribed signal is reported; and the signal detection result meets a predefined condition.

## Description

### CROSS-REFERENCE

This application claims priority to Chinese Patent Application No. 202110100043.7, filed with the China National Intellectual Property Administration on January 25, 2021 and entitled "PATH SWITCHING METHOD, TERMINAL, AND NETWORK SIDE DEVICE", which is incorporated herein by reference in its entirety.

### TECHNICAL FIELD

This application pertains to the field of wireless communication technologies, and specifically relates to a path switching method, a terminal, and a network side device.

### BACKGROUND

In a related communication technology, service transmission may be directly performed between terminals, or service transmission may be performed through a network side device such as a core network or a base station. However, in a communication scene such as a subway or a station, a connection between terminals or between a terminal and a network side device may be unstable due to interference of a wireless environment, and consequently communication quality is affected.

### SUMMARY

Embodiments of this application provide a path switching method, a terminal, and a network side device, to resolve a problem that communication quality is affected because a connection between terminals or between a terminal and a network side device is unstable.

According to a first aspect, a path switching method is provided. The method is performed by a first terminal and includes: performing switching between at least two paths in a case that a first condition is met, where the first condition includes at least one of the following: a path switching indication sent by a network side device is received, where the path switching indication is used to instruct the first terminal to switch between the at least two paths; a path switching request is sent to the network side device, where the path switching request is used to request the network side device to switch the first terminal between the at least two paths; a prescribed signal is detected, where the prescribed signal is a signal corresponding to a target path, and the target path is one of the at least two paths; a signal detection result corresponding to the prescribed signal is reported; and the signal detection result meets a predefined condition.

According to a second aspect, a path switching method is provided. The method is performed by a network side device and includes: configuring and/or activating a target path in a case that a third condition is met, where the third condition includes any one of the following: a path switching indication is sent to a first terminal, where the path switching indication is used to instruct the first terminal to switch between at least two paths; a path switching request sent by the first terminal is received, where the path switching request is used to request the network side device to switch the first terminal between the at least two paths; and a signal detection result reported by the first terminal is received, where the signal detection result is used to indicate a transmission parameter corresponding to the target path, where the target path is one of the at least two paths, and the target path is a path corresponding to the path switching indication, the path switching request, or the signal detection result.

According to a third aspect, a path switching apparatus is provided. The apparatus includes a switching module, configured to perform switching between at least two paths in a case that a first condition is met, where the first condition includes at least one of the following: a path switching indication sent by a network side device is received, where the path switching indication is used to instruct a first terminal to switch between the at least two paths; a path switching request is sent to the network side device, where the path switching request is used to request the network side device to switch the first terminal between the at least two paths; a prescribed signal is detected, where the prescribed signal is a signal corresponding to a target path, and the target path is one of the at least two paths; a signal detection result corresponding to the prescribed signal is reported; and the signal detection result meets a predefined condition.

According to a fourth aspect, a path switching apparatus is provided. The apparatus includes a configuration module, configured to configure and/or activate a target path in a case that a third condition is met, where the third condition includes any one of the following: a path switching indication is sent to a first terminal, where the path switching indication is used to instruct the first terminal to switch between at least two paths; a path switching request sent by the first terminal is received, where the path switching request is used to request a network side device to switch the first terminal between the at least two paths; and a signal detection result reported by the first terminal is received, where the signal detection result is used to indicate a transmission parameter corresponding to the target path, where the target path is one of the at least two paths, and the target path is a path corresponding to the path switching indication, the path switching request, or the signal detection result.

According to a fifth aspect, a terminal is provided. The terminal includes a processor, a memory, and a program or an instruction that is stored in the memory and that can be run on the processor, where the program or the instruction is executed by the processor to implement the steps of the method in the first aspect.

According to a sixth aspect, a network side device is provided. The network side device includes a processor, a memory, and a program or an instruction that is stored in the memory and that can be run on the processor, where the program or the instruction is executed by the processor to implement the steps of the method in the second aspect.

According to a seventh aspect, a readable storage medium is provided. The readable storage medium stores a program or an instruction, and the program or the instruction is executed by a processor to implement the steps of the method in the first aspect or the steps of the method in the second aspect.

According to an eighth aspect, a chip is provided. The chip includes a processor and a communication interface, the communication interface is coupled to the processor, and the processor is configured to run a program or an instruction of a network side device to implement the method in the first aspect or the method in the second aspect.

According to a ninth aspect, a computer program product is provided. The computer program product includes a processor, a memory, and a program or an instruction that is stored in the memory and that can be run on the processor, where when the program or the instruction is executed by the processor, the steps of the method in the first aspect or the method in the second aspect are implemented.

In the embodiments of this application, a first terminal is switched between at least two paths in a case that a path switching indication sent by a network side device is received, or a path switching request is sent to the network side device, or a signal detection result is reported. Therefore, effective switching between paths can be implemented, and a problem that communication quality is affected because a connection between terminals or between a terminal and a network side device is unstable is resolved.

### BRIEF DESCRIPTION OF DRAWINGS

FIG. 1 is a schematic structural diagram of a wireless communication system according to an example embodiment of this application;
FIG. 2 is a schematic flowchart of a path switching method according to an example embodiment of this application;
FIG. 3 is a schematic flowchart of a path switching method according to another example embodiment of this application;
FIG. 4 is a schematic flowchart of a path switching method according to still another example embodiment of this application;
FIG. 5a is a block diagram of a path switching apparatus according to an example embodiment of this application;
FIG. 5b is a block diagram of a path switching apparatus according to another example embodiment of this application;
FIG. 6a is a block diagram of a path switching apparatus according to another example embodiment of this application;
FIG. 6b is a block diagram of a path switching apparatus according to another example embodiment of this application;
FIG. 7 is a block diagram of a terminal according to an example embodiment of this application; and
FIG. 8 is a block diagram of a network side device according to an example embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first", "second", and the like are intended to distinguish between similar objects but do not describe a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, the following descriptions describe a new radio (New Radio, NR) system for example purposes, and NR terms are used in most of the following descriptions, although these technologies can also be applied to an application other than an NR system application, for example, a 6^{th} generation (6^{th} Generation, 6G) communication system.

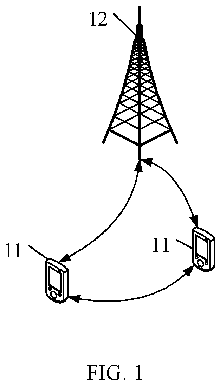

FIG. 1 is a block diagram of a wireless communication system to which embodiments of this application can be applied. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a wireless fidelity (Wireless Fidelity, Wi-Fi) node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

With reference to the accompanying drawings, the technical solutions provided in the embodiments of this application are described in detail through specific embodiments and application scenes.

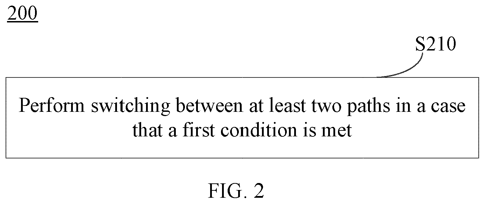

FIG. 2 is a schematic flowchart of a path switching method 200 according to an example embodiment of this application. The method 200 may be performed by a first terminal, for example, hardware and/or software installed in the first terminal. The method 200 includes the following steps.

S210. Perform switching between at least two paths in a case that a first condition is met.

The first condition includes at least one of the following (1) to (5):
(1) The first terminal receives a path switching indication sent by a network side device.

The path switching indication is used to instruct the first terminal to switch between the at least two paths. In this embodiment, the path switching indication may be determined by the network side device based on a path transmission parameter reported by the first terminal, or may be determined based on a preconfigured protocol or the like. In a case that the path switching indication may be determined by the network side device based on the path transmission parameter reported by the first terminal, if the transmission parameter indicates that a connection corresponding to a current path of the first terminal is unstable, the network side device may send the path switching indication to the first terminal, to instruct the first terminal to perform path switching. It can be understood that a target path is one of the at least two paths.

(2) The first terminal sends a path switching request to the network side device, where the path switching request is used to request the network side device to switch the first terminal between the at least two paths.

The path switching request may include one or more pieces of information. For example, in a possible implementation, the path switching request may include at least one of the following (2a) to (2i).

(2a) An identifier (Identifier, ID) of a second terminal.

The second terminal may be a terminal that directly performs data transmission with the first terminal, or may be a terminal that performs data transmission with the first terminal through the network side device. This is not limited herein.

(2b) An identifier of a target bearer corresponding to the target path.

(2c) An identifier of a target network corresponding to the target path.

The target network may be a network between the first terminal and the second terminal or between the first terminal and the network side device, such as a Wi-Fi network, a Bluetooth network, a sidelink (Sidelink) network, or a UU network. This is not limited herein.

(2d) A target link on which path switching is initiated.

The target link may be a downlink (Downlink), an uplink (Uplink), a sidelink, or the like.

(2e) The target path.

The target path may be one of the at least two paths, and may be specifically determined by the first terminal. For example, the target path may be determined by the terminal based on a transmission parameter such as communication quality of a path, or may be agreed upon by the network side device and the first terminal in advance, or may be specified by a protocol. This is not limited herein.

(2f) A reason for initiating path switching.

The reason for initiating path switching may include a human body radiation limitation (Maximum Permissible Exposure, MPE/Specific Absorption Rate, SAR), a terminal power consumption limitation, a network coverage limitation, a network throughput limitation, signal quality, insufficient battery power, and the like. This is not limited in this embodiment.

For example, if the first terminal detects that human radiation is greater than a threshold in a communication process, the first terminal may send the path switching request to the network side device to request path switching, so as to ensure communication quality of communication between the first terminal and another terminal.

(2h) A transmission manner of the path switching request.

The path switching request is sent through a Medium Access Control control element (Medium Access Control-Control Element, MACCE), a radio resource control (Radio Resource Control, RRC) message, an uplink control information (Uplink Control Information, UCI) message, a non-access stratum (NAS) message, or physical layer signaling (for example, a scheduling request (Scheduling Request, SR)).

(2i) First indication information used to indicate whether reporting of the path switching request is authorized by the network side device.

Being authorized by the network side device may include: before the first terminal sends the path switching request, a first network node (that is, the network side device) triggers a user authorization process to obtain an authorization allowed to be reported, or a second network node (that is, the network side device) configures a corresponding mode based on the authorization, and when the first terminal is in this mode, triggers the first terminal to send the path switching request. It can be understood that the first network node may be the same or different. This is not limited herein.

It should be noted that, in a possible implementation, before sending the path switching request, the first terminal may send the identifier of the second terminal and/or a target network identifier to the network side device, so that the network side device performs a predetermined operation based on the identifier of the second terminal and/or the target network identifier, such as associating terminals, and further performs path switching based on the associated terminals, thereby ensuring reliability during path switching.

(3) A prescribed signal is detected, where the prescribed signal is a signal corresponding to a target path, and the target path is one of the at least two paths.

(4) A signal detection result corresponding to the prescribed signal is reported.

(5) The signal detection result meets a predefined condition.

In the foregoing (3) to (5), the prescribed signal may be a scheduling signal, a reference signal (Reference Signal, RS), or the like corresponding to the target path. Optionally, the predetermined signal may be agreed upon by the network side device and the first terminal through negotiation, or may be agreed by a protocol. This is not limited herein.

Optionally, the signal detection result may include reference signal received power (Reference Signal Received Power, RSRP), interference information, a signal to interference plus noise ratio (signal to interference plus noise ratio, SINR), a channel quality indicator (Channel quality indicator, CQI), and the like, and the interference information may be information related to interference caused by another terminal or device to the first terminal.

The predefined condition may be agreed upon by the network side device and the first terminal through negotiation, or may be agreed by a protocol. In this embodiment, if the signal detection result varies, the predefined condition may vary. For example, the predefined condition may be set based on reference signal received power, interference information, a signal to interference plus noise ratio, or the like. This is not limited herein.

It should be noted that, for the foregoing (2) and (4), the first terminal may directly perform path switching locally after sending the path switching request or the signal detection result, or may perform path switching after receiving response information fed back by the network side device. This is not limited in this embodiment.

In addition, the target path may be determined by the terminal and the network side device through negotiation, may be preconfigured by the network side device, or may be specified by a protocol. This is not limited herein.

It should be noted that the network side device in this embodiment may be a core network, a base station, or the like. The first terminal and/or the second terminal may be a mobile phone, smart glasses, a smart headset, a smart watch, or the like. In addition, for the network side device, the first terminal, and the second terminal, refer to the related descriptions of the terminal and the network side device in the foregoing wireless communication system. To avoid repetition, details are not described herein again.

In this embodiment, a first terminal is switched between at least two paths in a case that a path switching indication sent by a network side device is received, or a path switching request is sent to the network side device, or a signal detection result is reported. Therefore, effective switching between paths can be implemented, and a problem that communication quality is affected because a connection between terminals or between a terminal and a network side device is unstable is resolved.

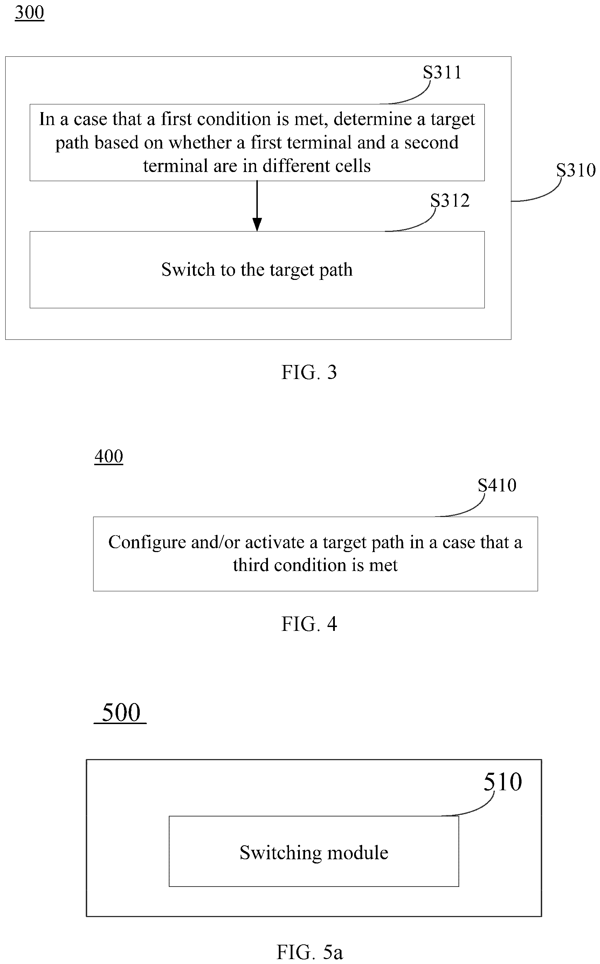

FIG. 3 is a schematic flowchart of a path switching method 300 according to an example embodiment of this application. The method 300 may be performed by a first terminal, for example, hardware and/or software installed in the first terminal. The method 300 includes the following steps.

S310. Perform switching between at least two paths in a case that a first condition is met.

For an implementation process of S310, refer to the related descriptions in the method 200. In addition, in a possible implementation of this embodiment, the at least two paths may include any one of the following (1) to (9).
(1) A first path used by the first terminal to transmit data to a second terminal.

In this case, the first terminal and the second terminal may be directly connected to each other through Wi-Fi, Bluetooth, a sidelink, or the like, to implement data transmission.

(2) A second path used by the first terminal to transmit data to the second terminal through the network side device.

In this case, the first terminal and the second terminal are connected to each other through the network side device, for example, a UU connection.

In a possible implementation, in a case that the first terminal is switched to the second path, the first terminal may further perform at least one of the following (2a) or (2b) to adapt to a scene in which an uplink service or a downlink service is dynamically switched between different paths.

(2a) Monitor a downlink scheduling service, and determining, based on specified information corresponding to the downlink scheduling service, whether the downlink scheduling service needs to be received and/or forwarded.

The specified information may include at least one of a radio network temporary identifier (Radio Network Temporary Identifier, RNTI), a dedicated DCI field indication, or a specific bit combination in downlink control information (Downlink Control Information, DCI).

Optionally, the specific bit combination is a specific combination of values indicated in fields such as resource allocation, a hybrid automatic repeat request (Hybrid automatic repeat request, HARQ) process (process), and the like. This is not limited herein.

(2b) Monitor an uplink service, and determine, based on a predetermined rule, whether the uplink service needs to be sent and/or forwarded.

The predetermined rule may be determined based on a size of a quantity of transmit bits, a size of a remaining power headroom, or the like. For example, when the quantity of transmit bits is greater than a threshold, the first terminal sends the uplink service, and when the quantity of transmit bits is not greater than the threshold, the first terminal forwards the uplink service. This is not limited herein.

In addition, the predetermined rule may be determined by the network side device and the first terminal through negotiation, or may be configured by the network side device, or specified by a protocol.

In another possible implementation, the first terminal is switched to the second path, and in a case that the first terminal and the second terminal are located in a predetermined group (group) or the network side device sends a DCI message in a single cell point to multipoint (Single Cell Point To Multipoint, SC-PTM) manner, the first terminal may monitor a DCI message sent by the network side device to the second terminal, and further determine, based on the DCI message, whether to perform path switching, whether to forward/receive service data, or the like, which may be specifically performed based on the DCI message.

(3) A third path used by the second terminal to deputize for the first terminal to perform uplink transmission.

In this case, uplink transmission and downlink transmission corresponding to the first terminal are separated. That is, in this embodiment, it is specified that the terminal performs separate uplink transmission between different paths. Therefore, flexibility during path switching can be further provided to ensure communication quality.

In a possible implementation, in a case that a first uplink channel corresponding to the first terminal meets a second condition, the first uplink channel corresponding to the first terminal is delegated to the second terminal. The first uplink channel may include at least one of a physical uplink shared channel (Physical Uplink Shared Channel, PUSCH), a physical uplink control channel (Physical Uplink Control Channel, PUCCH), a physical random access channel (Physical Random Access Channel, PRACH), and a sounding reference signal (Sounding Reference Signal, SRS).

In this embodiment, to ensure that the network side device and the first terminal have a unified understanding of a delegation condition (that is, the second condition), the first terminal may send first information to the network side device, where the first information includes the second condition used to delegate the first uplink channel corresponding to the first terminal to the second terminal. In a possible implementation, the second condition may include at least one of the following (3a) to (3e).

(3a) A quantity of transmit bits is greater than a first predetermined value.

(3b) A power headroom report (Power Headroom Report, PHR) is less than a second predetermined value.

In the foregoing (1) and (2), the first predetermined value and the second predetermined value may be configured by the network side device, or may be specified by a protocol. This is not limited herein.

(3c) Information corresponding to a specific bearer is sent.

(3d) Information corresponding to a specific logical channel is sent.

The specific bearer and the specific logical channel in the foregoing (3c) and (3d) may be configured by the network side device, or may be specified by a protocol. This is not limited herein. The specific logical channel may include a PUSCH, a PUCCH, and the like.

(3e) UCI is carried.

It can be understood that the second condition may include but is not limited to the foregoing (3a) to (3e). For example, in an implementation, the first terminal may further report a corresponding uplink limitation. In this case, if scheduling of the network side device exceeds the corresponding uplink limitation, a corresponding delegation process is triggered.

It should be noted that in a case that the first uplink channel corresponding to the first terminal is delegated to the second terminal, a value of a specified parameter corresponding to the first uplink channel is increased by a third predetermined value (for example, delta) compared with sending by the first terminal, and the specified parameter is a minimum value in K1 and K2.

It can be understood that in an implementation process of the foregoing solution, the first terminal needs to report the third predetermined value to the network side device, so that scheduling of the network side device meets a limitation corresponding to the minimum value in K1/K2 + the third predetermined value (delta). Therefore, in a case that the network side device schedules a PUSCH, a PUCCH, or the like based on normal K1/K2, if the second terminal directly performs sending, the second terminal performs sending based on K1/K2. If sending is delegated to the first terminal, the received value of K1/K2 is increased by Delta for sending.

Correspondingly, in a case that the first terminal delegates the second terminal to send a second uplink channel, a value of a specified parameter corresponding to the second uplink channel is increased by the third predetermined value compared with sending by the second terminal, and the specified parameter is a minimum value in K1 and K2.

In the foregoing implementation solution, if an uplink channel of the first terminal is delegated to the second terminal, all or a part of uplink transmission of the first terminal may be delegated to the second terminal. This is not limited herein.

(4) A fourth path including the first path and the second path, where in a case that both the first path and the second path are maintained, a connection corresponding to the first path or a connection corresponding to the second path is in a suspend (Suspend) state.

In this case, if both a UU connection and a sidelink connection are maintained between the first terminal and the second terminal, one of the UU connection and the sidelink is in a suspend state.

(5) A fifth path used by the first terminal to transmit data to the network side device.

Different from the foregoing second path, in the fifth path, data transmitted by the first terminal to the network side device may not be transmitted to the second terminal. However, in the second path, data transmitted by the first terminal to the network side device needs to be transmitted to the second terminal.

In a possible implementation, similar to the foregoing second path, the first terminal is switched to the fifth path, and in a case that the first terminal and the second terminal are located in a predetermined group (group) or the network side device sends a DCI message in an SC-PTM manner, the first terminal may monitor a DCI message sent by the network side device to the second terminal, and further determine, based on the DCI message, whether to perform path switching, whether to forward/receive service data, or the like, which may be specifically performed based on the DCI message.

(6) A sixth path used by the first terminal to transmit data to the network side device through the second terminal.

Different from the foregoing first path, in the sixth path, the second terminal needs to transmit, to the network side device, data sent by the first terminal. In the first path, the second terminal may not transmit, to the network side device, data sent by the first terminal.

(7) A seventh path used by the first terminal to forward data of the second terminal to the network side device.

(8) An eighth path used by the first terminal to deputize for the second terminal to perform uplink transmission.

(9) A ninth path obtained after a sequence of the first terminal is exchanged with that of the second terminal in a specified path, where the specified path is one of the first path to the eighth path.

For example, if the specified path is the first path, the ninth path is used by the second terminal to transmit data to the first terminal. For example, if the specified path is the second path, the ninth path is used by the second terminal to transmit data to the first terminal through the network side device.

In a possible implementation, based on the foregoing first path to the ninth path, referring to FIG. 3 again, an implementation process of S310 may include S311 and S312, and content is as follows:

S311. In a case that the first condition is met, determine the target path based on whether the first terminal and the second terminal are in different cells.

For example, if the first terminal and the second terminal are located in a same cell, the first terminal and the second terminal may normally employ the foregoing various paths. However, if the first terminal is in a cell 1 and the second terminal is switched from the cell 1 to a cell 2, the foregoing sixth path is not applicable to a path switching scene of the first terminal.

In this embodiment, based on different communication scenes and transmission parameters, the target path may be one of the first path to the sixth path.

S312. Switch to the target path.

If the first terminal and the second terminal may normally employ the foregoing various paths, the first terminal may be switched from a current path to the target path, or may directly enable the target path. This is not limited herein.

Further, to implement smooth path switching, the first terminal may further send second information to the network side device. The second information includes at least one of the following (1) to (4):
(1) An association relationship between the first terminal and a second terminal. For example, the association relationship may be whether the first terminal and the second terminal have a same bearer, whether the first terminal and the second terminal are located in a same cell, or whether the first terminal and the second terminal are bound together. This is not limited herein.

In this embodiment, for the first terminal and the second terminal that have the association relationship, when path switching is being performed, path switching may be initiated synchronously. It should be noted that, considering that a problem that the first terminal and the second terminal may be connected to different cells due to different switching occasions, the following two solutions shown in (1a) and (1b) are provided in this embodiment.

(1a) The first terminal may determine, based on whether the first terminal and the second terminal are located in different cells, whether to directly send data to a cell or send data to the network side device by means of forwarding to the second terminal.

In this case, if the first terminal and the second terminal each send related information to a corresponding cell, a connection between the first terminal and the second terminal is in an unavailable state.

(1b) Determine a forwarding relationship through coordination between nodes.

For example, for a downlink scheduling service, if the first terminal is located in a cell 1, and the second terminal is located in a cell 2, a service arriving at the cell 1 is first forwarded to the cell 2, then is sent from the cell 2 to the second terminal, and finally is sent from the second terminal to the first terminal; or in a predefined switching scene, the first terminal/a base station (gNB) reports a corresponding association relationship and a cell relationship to the network side device (core network), and the core network sends a data packet to a corresponding cell based on the association relationship between the first terminal and the second terminal and the cell relationship.

For another example, for an uplink service, the gNB may still perform forwarding similar to that in (1b) on corresponding information, and details are not described herein again.

(2) A network association manner used when the association relationship is implemented between the first terminal and the second terminal, where the network association manner includes any one of Wi-Fi, Bluetooth, a sidelink, and a UU link.

(3) Identifier information, where the identifier information is an identifier of a network and/or an identifier of a network device corresponding to the network association manner.

(4) A first measurement quantity corresponding to the target path, where the first measurement quantity may include but is not limited to RSRP, an interference situation, an SINR, a CQI, and the like.

Correspondingly, the network side device may determine measurement configuration information based on the received second information, and send the measurement configuration information to the first terminal, so that the first terminal obtains a measurement result through measurement based on the measurement configuration information, and further reports the measurement result to the network side device. The measurement configuration information may include network identifier information and/or a second measurement quantity, and the second measurement quantity may be the same as or different from the first measurement quantity.

Optionally, that the first terminal reports the measurement result may include at least one of the following (4a) to (4d):
(4a) Report the measurement result through UCI on a layer 1.
(4b) Report the measurement result through a MAC CE on a layer 2.
(4c) Report the measurement result through RRC on a layer 3.
(4d) Report the measurement result through a NAS message.

It can be understood that, in this embodiment, the path switching indication sent by the network side device may be determined by the network side device based on the measurement result.

Further, in the path switching method provided in this embodiment of this application, after sending the path switching indication, or receiving the path switching request or the signal detection result, the network side device may configure and/or activate the target path, where the target path is a path corresponding to the path switching indication, the path switching request, or the signal detection result.

Optionally, when the network side device configures and/or activates the target path, at least one of the following (1) to (4) may be included:
(1) Associate the first terminal with a second terminal, and transmit association information between network nodes corresponding to the first terminal and the second terminal.

For example, the first terminal may directly send RNTI information of the first terminal and the second terminal to the network side device, and the network side device associates the first terminal with the second terminal based on the RNTI information. In this embodiment, the "associating" may also be understood as binding.

It should be noted that if a core network associates the first terminal with the second terminal, the core network needs to send bound information to a corresponding base station.

(2) Identify a target bearer, where the target bearer is a bearer corresponding to the target path.

For example, the network side device may specifically identify a configured bearer that needs to be forwarded by the first terminal to the second terminal or a bearer that needs to be forwarded by the second terminal to the first terminal, so that the second terminal can initiate forwarding to the first terminal based on received service bearer information, or the first terminal can initiate forwarding to the second terminal based on received service bearer information.

(3) Configure same third information for the associated first terminal and the second terminal, where the third information includes bearer information and/or an RNTI (for example, an SC-PTM RNTI).

In this case, after configuring and/or activating the target path, the network side device may further send second indication information to the first terminal, where the second indication information is used to indicate a receiving manner and/or a sending manner of transmitted data to the first terminal.

For example, the network side device may send the second indication information through signaling such as RRC or a MAC CE, to instruct/notify the first terminal and/or the second terminal of how to receive or send corresponding data (for example, uplink transmission, downlink transmission, or sidelink transmission). For example, data may be directly sent to the network side device, or directly received from the network side device, or forwarded from another terminal, or received from another terminal, or received from two links.

In the foregoing provided path switching method, a switching process of performing switching between the at least two paths and an information reporting process associated with the switching process are authorized by a user and/or authorized by a network. Details are not described in this embodiment.

FIG. 4 is a schematic flowchart of a path switching method 400 according to an example embodiment of this application. The method 400 may be performed by a network side device, for example, hardware and/or software installed in the network side device. The network side device may be a core network, a base station, or the like. In this embodiment, the method 400 includes any one of the following.

S410. Configure and/or activate a target path in a case that a third condition is met.

The third condition includes any one of the following (1) to (3):
(1) A path switching indication is sent to a first terminal, where the path switching indication is used to instruct the first terminal to switch between at least two paths.
(2) A path switching request sent by the first terminal is received, where the path switching request is used to request the network side device to switch the first terminal between the at least two paths.
(3) A signal detection result reported by the first terminal is received, where the signal detection result is used to indicate a transmission parameter corresponding to the target path.

The target path in the foregoing S410 may be one of the at least two paths, and the target path is a path corresponding to the path switching indication, the path switching request, or the signal detection result.

In a possible implementation, the path is any one of the following: a first path used by the first terminal to transmit data to a second terminal; a second path used by the first terminal to transmit data to the second terminal through the network side device; a third path used by the second terminal to deputize for the first terminal to perform uplink transmission; a fourth path including the first path and the second path, where in a case that both the first path and the second path are maintained, a connection corresponding to the first path or a connection corresponding to the second path is in a suspend state; a fifth path used by the first terminal to transmit data to the network side device; a sixth path used by the first terminal to transmit data to the network side device through the second terminal; a seventh path used by the first terminal to forward data of the second terminal to the network side device; an eighth path used by the first terminal to deputize for the second terminal to perform uplink transmission; and a ninth path obtained after a sequence of the first terminal is exchanged with that of the second terminal in a specified path, where the specified path is one of the first path to the eighth path.

In another possible implementation, the path switching request includes at least one of the following: an identifier of a second terminal; an identifier of a target bearer corresponding to the target path; an identifier of a target network corresponding to the target path; a target link on which path switching is initiated; a reason for initiating path switching; a transmission manner of the path switching request; and first indication information used to indicate whether reporting of the path switching request is authorized by the network side device.

In still another possible implementation, the configuring and/or activating a target path includes at least one of the following: associating the first terminal with a second terminal, and transmitting association information between network nodes corresponding to the first terminal and the second terminal; identifying a target bearer, where the target bearer is a bearer corresponding to the target path; and configuring same third information for the associated first terminal and the second terminal, where the third information includes bearer information and/or a radio network temporary identifier RNTI.

In still another possible implementation, after the configuring and/or activating a target path, the method further includes: sending second indication information to the first terminal, where the second indication information is used to indicate a receiving manner and/or a sending manner of transmitted data to the first terminal.

In still another possible implementation, before the receiving a path switching request or a signal detection result sent by the first terminal, the method further includes: receiving an identifier of a second terminal and/or an identifier of a target network that are/is sent by the first terminal.

In still another possible implementation, before the sending a path switching indication to a first terminal, the method further includes: receiving second information sent by the first terminal, where the second information includes at least one of the following: an association relationship between the first terminal and a second terminal; a network association manner used when the association relationship is implemented between the first terminal and the second terminal; identifier information, where the identifier information is an identifier of a network and/or an identifier of a network device corresponding to the network association manner; and a first measurement quantity corresponding to the target path.

In still another possible implementation, the network association manner includes any one of Wi-Fi, Bluetooth, a sidelink, and a UU link.

In still another possible implementation, before the sending a path switching indication to a first terminal, the method further includes: receiving first information, where the first information includes a second condition used to delegate a first uplink channel corresponding to the first terminal to a second terminal.

In still another possible implementation, the second condition includes at least one of the following: a quantity of transmit bits is greater than a first predetermined value; a power headroom report PHR is less than a second predetermined value; information corresponding to a specific bearer is sent; information corresponding to a specific logical channel is sent; and uplink control information UCI is carried.

In still another possible implementation, before the sending a path switching indication to a first terminal, the method further includes: sending measurement configuration information to the first terminal, where the measurement configuration includes network identifier information and/or a second measurement quantity; and receiving a measurement result, where the measurement result is obtained by the first terminal through measurement based on the measurement configuration information, and the path switching indication is determined by the network side device based on the measurement result.

It should be noted that for an implementation process of the implementations provided in this embodiment, refer to the related descriptions in the method 200 and the method 300. To avoid repetition, details are not described herein again.

In this embodiment, a network side device configures and/or activates a target path in a case that a path switching indication is sent, or a path switching request is received, or a signal detection result is received. Therefore, a problem that communication quality is poor because a connection between terminals or between a terminal and a network side device is unstable is resolved.

In addition, the path switching method provided in the embodiments of this application may be performed by a path switching apparatus, or a control module that is in the path switching apparatus and that is configured to perform the path switching method. In the embodiments of this application, an example in which the path switching apparatus performs the path switching method is used to describe the path switching apparatus provided in the embodiments of this application.

FIG. 5a is a block diagram of a path switching apparatus 500 according to an example embodiment of this application. The apparatus 500 includes a switching module 510, configured to perform switching between at least two paths in a case that a first condition is met, where the first condition includes at least one of the following: a path switching indication sent by a network side device is received, where the path switching indication is used to instruct a first terminal to switch between the at least two paths; a path switching request is sent to the network side device, where the path switching request is used to request the network side device to switch the first terminal between the at least two paths; a prescribed signal is detected, where the prescribed signal is a signal corresponding to a target path, and the target path is one of the at least two paths; a signal detection result corresponding to the prescribed signal is reported; and the signal detection result meets a predefined condition.

In a possible implementation, the path is any one of the following: a first path used by the first terminal to transmit data to a second terminal; a second path used by the first terminal to transmit data to the second terminal through the network side device; a third path used by the second terminal to deputize for the first terminal to perform uplink transmission; a fourth path including the first path and the second path, where in a case that both the first path and the second path are maintained, a connection corresponding to the first path or a connection corresponding to the second path is in a suspend state; a fifth path used by the first terminal to transmit data to the network side device; a sixth path used by the first terminal to transmit data to the network side device through the second terminal; a seventh path used by the first terminal to forward data of the second terminal to the network side device; an eighth path used by the first terminal to deputize for the second terminal to perform uplink transmission; and a ninth path obtained after a sequence of the first terminal is exchanged with that of the second terminal in a specified path, where the specified path is one of the first path to the eighth path.

In still another possible implementation, the path switching request includes at least one of the following: an identifier of a second terminal; an identifier of a target bearer corresponding to the target path; an identifier of a target network corresponding to the target path; a target link on which path switching is initiated; the target path; a reason for initiating path switching; a transmission manner of the path switching request; and first indication information used to indicate whether reporting of the path switching request is authorized by the network side device.

In still another possible implementation, the reason for initiating path switching includes at least one of the following: a human body radiation limitation; a terminal power consumption limitation; a network coverage limitation; and a network throughput limitation.

In still another possible implementation, in a case that the first condition is met, a switching process in which the switching module is switched between the at least two paths and an information reporting process associated with the switching process are authorized by a user and/or authorized by a network.

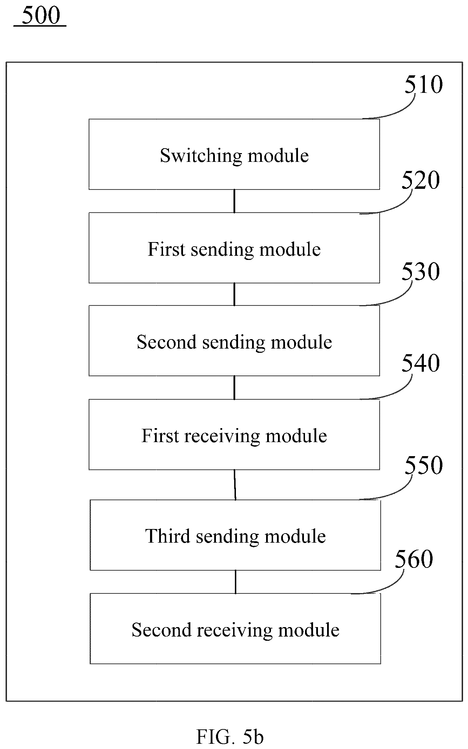

In still another possible implementation, referring to FIG. 5b, the apparatus 500 further includes a first sending module 520, configured to send an identifier of a second terminal and/or a target network identifier to the network side device.

In still another possible implementation, the switching module 510 is configured to: determine the target path based on whether the first terminal and the second terminal are in different cells; and switch to the target path.

In still another possible implementation, the switching module 510 is configured to: in a case that a first uplink channel corresponding to the first terminal meets a second condition, delegate the first uplink channel corresponding to the first terminal to the second terminal.

In still another possible implementation, referring to FIG. 5b again, the apparatus 500 further includes a second sending module 530, configured to send first information to the network side device, where the first information includes the second condition used to delegate the first uplink channel corresponding to the first terminal to the second terminal.

In still another possible implementation, the second condition includes at least one of the following: a quantity of transmit bits is greater than a first predetermined value; a power headroom report PHR is less than a second predetermined value; information corresponding to a specific bearer is sent; information corresponding to a specific logical channel is sent; and uplink control information UCI is carried.

In still another possible implementation, in a case that the first uplink channel corresponding to the first terminal is delegated to the second terminal, a value of a specified parameter corresponding to the first uplink channel is increased by a third predetermined value compared with sending by the first terminal, and the specified parameter is a minimum value in K1 and K2.

In still another possible implementation, in a case of switching to the second path, the switching module 510 is further configured to perform at least one of the following: monitoring a downlink scheduling service, and determining, based on specified information corresponding to the downlink scheduling service, whether the downlink scheduling service needs to be received and/or forwarded; and monitoring an uplink service, and determining, based on a predetermined rule, whether the uplink service needs to be sent and/or forwarded.

In still another possible implementation, the specified information includes at least one of a radio network temporary identifier RNTI, a dedicated DCI field indication, and a specific bit combination in downlink control information DCI.

In still another possible implementation, in a case of switching to the second path, the apparatus further includes a first receiving module 540, configured to receive second indication information sent by the network side device, where the second indication information is used to indicate a receiving manner and/or a sending manner of transmitted data.

In still another possible implementation, in a case that the target path is the second path or the fifth path, the switching module 510 is further configured to: in a case that the first terminal and the second terminal are located in a predetermined group or in a case that the network side device sends a DCI message in an SC-PTM manner, monitor a DCI message sent by the network side device to the second terminal.

In still another possible implementation, referring to FIG. 5b again, the apparatus 500 further includes a third sending module 550, configured to send second information to the network side device, where the second information includes at least one of the following: an association relationship between the first terminal and a second terminal; a network association manner used when the association relationship is implemented between the first terminal and the second terminal; identifier information, where the identifier information is an identifier of a network and/or an identifier of a network device corresponding to the network association manner; and a first measurement quantity corresponding to the target path.

In still another possible implementation, the network association manner includes any one of Wi-Fi, Bluetooth, a sidelink, and a UU link.

In still another possible implementation, referring to FIG. 5b again, the apparatus 500 further includes a second receiving module 560, configured to: receive measurement configuration information sent by the network side device, where the measurement configuration includes network identifier information and/or a second measurement quantity; and report a measurement result, where the measurement result is obtained through measurement based on the measurement configuration information, and the path switching indication is determined by the network side device based on the measurement result.

In still another possible implementation, the second receiving module 560 is configured to perform at least one of the following: reporting the measurement result through UCI on a layer 1; reporting the measurement result through a Medium Access Control control element MAC CE on a layer 2; reporting the measurement result through radio resource control RRC on a layer 3; and reporting the measurement result through an NAS message.

The path switching apparatus 500 in this embodiment of this application may be an apparatus, or may be a component, an integrated circuit, or a chip in a terminal. The apparatus may be a mobile terminal, or a non-mobile terminal. For example, the mobile device may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The path switching apparatus 500 in this embodiment of this application may be an apparatus with an operating system. The operating system may be an Android (Android) operating system, an iOS operating system, or another possible operating system. This is not specifically limited in this embodiment of this application.

The path switching apparatus 500 provided in this embodiment of this application can implement the processes implemented in the method embodiments in FIG. 2 to FIG. 3, and achieve a same technical effect. To avoid repetition, details are not described herein again.

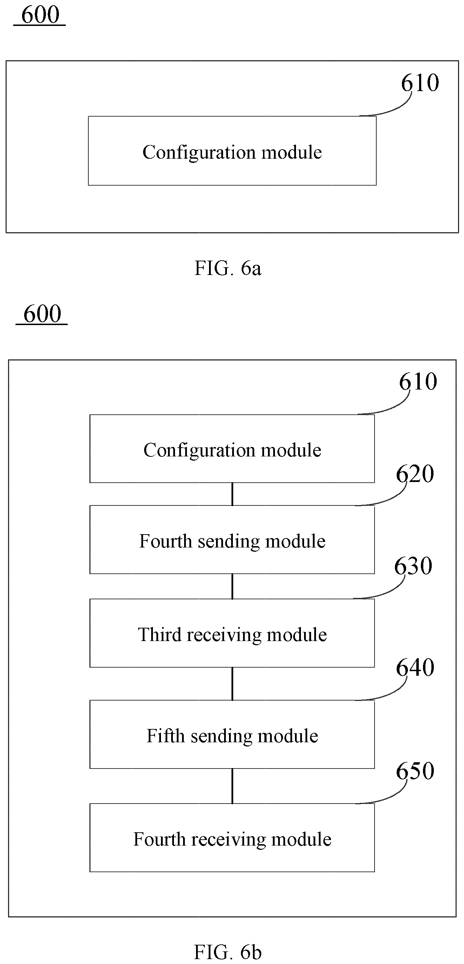

FIG. 6a is a path switching apparatus 600 according to an example embodiment of this application. The apparatus 600 includes a configuration module 610, configured to configure and/or activate a target path in a case that a third condition is met, where the third condition includes any one of the following: a path switching indication is sent to a first terminal, where the path switching indication is used to instruct the first terminal to switch between at least two paths; a path switching request sent by the first terminal is received, where the path switching request is used to request a network side device to switch the first terminal between the at least two paths; and a signal detection result reported by the first terminal is received, where the signal detection result is used to indicate a transmission parameter corresponding to the target path, where the target path is one of the at least two paths, and the target path is a path corresponding to the path switching indication, the path switching request, or the signal detection result.

In a possible implementation, the path is any one of the following: a first path used by the first terminal to transmit data to a second terminal; a second path used by the first terminal to transmit data to the second terminal through the network side device; a third path used by the second terminal to deputize for the first terminal to perform uplink transmission; a fourth path including the first path and the second path, where in a case that both the first path and the second path are maintained, a connection corresponding to the first path or a connection corresponding to the second path is in a suspend state; a fifth path used by the first terminal to transmit data to the network side device; a sixth path used by the first terminal to transmit data to the network side device through the second terminal; a seventh path used by the first terminal to forward data of the second terminal to the network side device; an eighth path used by the first terminal to deputize for the second terminal to perform uplink transmission; and a ninth path obtained after a sequence of the first terminal is exchanged with that of the second terminal in a specified path, where the specified path is one of the first path to the eighth path.

In another possible implementation, the path switching request includes at least one of the following: an identifier of a second terminal; an identifier of a target bearer corresponding to the target path; an identifier of a target network corresponding to the target path; a target link on which path switching is initiated; a reason for initiating path switching; a transmission manner of the path switching request; and first indication information used to indicate whether reporting of the path switching request is authorized by the network side device.

In still another possible implementation, the configuration module 610 is configured to perform at least one of the following: associating the first terminal with a second terminal, and transmitting association information between network nodes corresponding to the first terminal and the second terminal; identifying a target bearer, where the target bearer is a bearer corresponding to the target path; and configuring same third information for the associated first terminal and the second terminal, where the third information includes bearer information and/or a radio network temporary identifier RNTI.

In still another possible implementation, referring to FIG. 6b, the apparatus 600 further includes a fourth sending module 620, configured to send second indication information to the first terminal, where the second indication information is used to indicate a receiving manner and/or a sending manner of transmitted data to the first terminal.

In still another possible implementation, referring to FIG. 6b again, the apparatus 600 further includes a third receiving module 630, configured to receive an identifier of a second terminal and/or an identifier of a target network that are/is sent by the first terminal.

In still another possible implementation, the third receiving module 630 is further configured to receive second information sent by the first terminal, where the second information includes at least one of the following: an association relationship between the first terminal and a second terminal; a network association manner used when the association relationship is implemented between the first terminal and the second terminal; identifier information, where the identifier information is an identifier of a network and/or an identifier of a network device corresponding to the network association manner; and a first measurement quantity corresponding to the target path.

In still another possible implementation, the network association manner includes any one of Wi-Fi, Bluetooth, a sidelink, and a UU link.

In still another possible implementation, the third receiving module 630 is further configured to receive first information, where the first information includes a second condition used to delegate a first uplink channel corresponding to the first terminal to a second terminal.

In still another possible implementation, the second condition includes at least one of the following: a quantity of transmit bits is greater than a first predetermined value; a power headroom report PHR is less than a second predetermined value; information corresponding to a specific bearer is sent; information corresponding to a specific logical channel is sent; and uplink control information UCI is carried.

In still another possible implementation, referring to FIG. 6b again, the apparatus 600 further includes a fifth sending module 640, further configured to send measurement configuration information to the first terminal, where the measurement configuration includes network identifier information and/or a second measurement quantity; and a fourth receiving module 650, configured to receive a measurement result, where the measurement result is obtained by the first terminal through measurement based on the measurement configuration information, and the path switching indication is determined by the network side device based on the measurement result.

The path switching apparatus 600 in this embodiment of this application may be an apparatus, or may be a component, an integrated circuit, or a chip in a network side device.

The path switching apparatus 600 in this embodiment of this application may be an apparatus with an operating system. The operating system may be an Android (Android) operating system, an iOS operating system, or another possible operating system. This is not specifically limited in this embodiment of this application.

The path switching apparatus 600 provided in this embodiment of this application can implement the processes implemented in the embodiment of the method 400 and achieve a same technical effect. To avoid repetition, details are not described herein again.

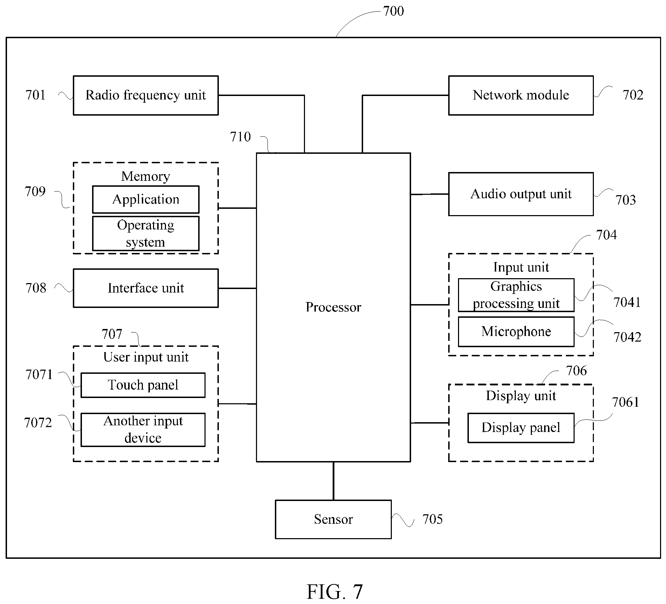

FIG. 7 is a schematic structural diagram of hardware of a terminal according to an embodiment of this application. A terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

A person skilled in the art can understand that the terminal 700 may further include a power supply (such as a battery) that supplies power to each component. The power supply may be logically connected to the processor 710 through a power supply management system, to implement functions such as charging and discharging management, and power consumption management through the power supply management system. The terminal structure shown in FIG. 7 constitutes no limitation on the terminal, and the terminal may include more or fewer components than those shown in the figure, or combine some components, or have different component arrangements. Details are not described herein.

It should be understood that, in this embodiment of this application, the input unit 704 may include a graphics processing unit (Graphics Processing Unit, GPU) 1041 and a microphone 7042, and the graphics processing unit 7041 processes image data of a still picture or a video obtained by an image capture apparatus (such as a camera) in a video capture mode or an image capture mode. The display unit 706 may include a display panel 7061. Optionally, the display panel 7061 may be configured in a form such as a liquid crystal display or an organic light-emitting diode. The user input unit 707 includes a touch panel 7071 and another input device 7072. The touch panel 7071 is also referred to as a touchscreen. The touch panel 7071 may include two parts: a touch detection apparatus and a touch controller. The another input device 7072 may include but is not limited to a physical keyboard, a functional button (such as a volume control button or a power on/off button), a trackball, a mouse, and a joystick. Details are not described herein.

In this embodiment of this application, the radio frequency unit 701 receives downlink data from a network side device and then sends the downlink data to the processor 710 for processing; and sends uplink data to the network side device. Usually, the radio frequency unit 701 includes but is not limited to an antenna, at least one amplifier, a transceiver, a coupler, a low noise amplifier, a duplexer, and the like.

The memory 709 may be configured to store a software program or an instruction and various data. The memory 709 may mainly include a program or instruction storage area and a data storage area. The program or instruction storage area may store an operating system, and an application or an instruction required by at least one function (for example, a sound playing function or an image playing function). In addition, the memory 709 may include a high-speed random access memory, and may further include a non-volatile memory. The non-volatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 710 may include one or more processing units. Optionally, an application processor and a modem processor may be integrated into the processor 710. The application processor mainly processes an operating system, a user interface, an application, an instruction, or the like. The modem processor mainly processes wireless communication, for example, a baseband processor. It can be understood that, alternatively, the modem processor may not be integrated into the processor 710.

The processor 710 is configured to perform switching between at least two paths in a case that a first condition is met, where the first condition includes at least one of the following: a path switching indication sent by a network side device is received, where the path switching indication is used to instruct a first terminal to switch between the at least two paths; a path switching request is sent to the network side device, where the path switching request is used to request the network side device to switch the first terminal between the at least two paths; a prescribed signal is detected, where the prescribed signal is a signal corresponding to a target path, and the target path is one of the at least two paths; a signal detection result corresponding to the prescribed signal is reported; and the signal detection result meets a predefined condition.

In this embodiment of this application, a terminal is switched between at least two paths in a case that a path switching indication sent by a network side device is received, or a path switching request is sent to the network side device, or a signal detection result is reported. Therefore, effective switching between paths can be implemented, and a problem that communication quality is affected because a connection between terminals or between a terminal and a network side device is unstable is resolved.

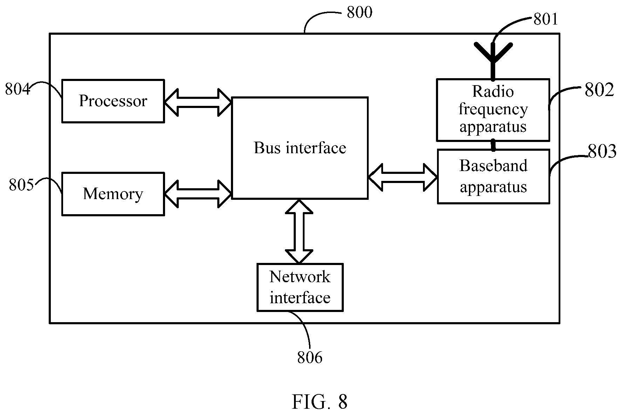

FIG. 8 shows a network side device 800 according to an embodiment of this application. The network side device 800 includes an antenna 801, a radio frequency apparatus 802, and a baseband apparatus 803. The antenna 801 is connected to the radio frequency apparatus 802. In an uplink direction, the radio frequency apparatus 802 receives information through the antenna 801, and sends the received information to the baseband apparatus 803 for processing. In a downlink direction, the baseband apparatus 803 processes to-be-sent information, and sends the information to the radio frequency apparatus 802. The radio frequency apparatus 802 processes the received information and then sends the information through the antenna 801.

The frequency band processing apparatus may be located in the baseband apparatus 803. The method performed by the network side device in the foregoing embodiment may be implemented in the baseband apparatus 803. The baseband apparatus 803 includes a processor 804 and a memory 805.

The baseband apparatus 803 may include, for example, at least one baseband board, where a plurality of chips are disposed on the baseband board. As shown in FIG. 8, one chip is, for example, the processor 804, which is connected to the memory 805, so as to invoke a program in the memory 805 to perform operations of the network side device shown in the foregoing method embodiment.

The baseband apparatus 803 may further include a network interface 806, configured to exchange information with the radio frequency apparatus 802. For example, the interface is a common public radio interface (common public radio interface, CPRI for short).

Specifically, the network side device in this embodiment of the present invention further includes an instruction or a program that is stored in the memory 805 and that can be run on the processor 804. The processor 804 invokes the instruction or the program in the memory 805 to perform the method performed by the modules shown in FIG. 6a and FIG. 6b, and a same technical effect is achieved. To avoid repetition, details are not described herein again.

An embodiment of this application further provides a readable storage medium. The readable storage medium stores a program or an instruction, and when the program or the instruction is executed by a processor, the processes of the foregoing path switching method embodiment are implemented and a same technical effect can be achieved. To avoid repetition, details are not described herein again.

The processor is a processor in the terminal in the foregoing embodiment. The readable storage medium includes a computer-readable storage medium, such as a computer read-only memory (Read-only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction of a network side device to implement the processes of the foregoing embodiment of the path switching method and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product. The computer program product includes a processor, a memory, and a program or instruction that is stored in the memory and that can run on the processor. When the program or the instruction is executed by the processor, the processes of the foregoing embodiment of the path switching method are implemented and a same technical effect can be achieved. To avoid repetition, details are not described herein again.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A path switching method, wherein the method is performed by a first terminal and comprises:
performing switching between at least two paths in a case that a first condition is met, wherein
the first condition comprises at least one of the following:
a path switching indication sent by a network side device is received, wherein the path switching indication is used to instruct the first terminal to switch between the at least two paths;
a path switching request is sent to the network side device, wherein the path switching request is used to request the network side device to switch the first terminal between the at least two paths;
a prescribed signal is detected, wherein the prescribed signal is a signal corresponding to a target path, and the target path is one of the at least two paths;
a signal detection result corresponding to the prescribed signal is reported; and
the signal detection result meets a predefined condition.

2. The method according to claim 1, wherein the path is at least one of the following:
a first path used by the first terminal to transmit data to a second terminal;
a second path used by the first terminal to transmit data to the second terminal through the network side device;
a third path used by the second terminal to deputize for the first terminal to perform uplink transmission;
a fourth path comprising the first path and the second path, wherein in a case that both the first path and the second path are maintained, a connection corresponding to the first path or a connection corresponding to the second path is in a suspend state;
a fifth path used by the first terminal to transmit data to the network side device;
a sixth path used by the first terminal to transmit data to the network side device through the second terminal;
a seventh path used by the first terminal to forward data of the second terminal to the network side device;
an eighth path used by the first terminal to deputize for the second terminal to perform uplink transmission; and
a ninth path obtained after a sequence of the first terminal is exchanged with that of the second terminal in a specified path, wherein the specified path is one of the first path to the eighth path.

3. The method according to claim 1, wherein the path switching request comprises at least one of the following:
an identifier of a second terminal;
an identifier of a target bearer corresponding to the target path;
an identifier of a target network corresponding to the target path;
a target link on which path switching is initiated;
the target path;
a reason for initiating path switching;
a transmission manner of the path switching request; and
first indication information used to indicate whether reporting of the path switching request is authorized by the network side device.

4. The method according to claim 3, wherein the reason for initiating path switching comprises at least one of the following:
a human body radiation limitation;
a terminal power consumption limitation;
a network coverage limitation; and
a network throughput limitation.

5. The method according to claim 1, wherein a switching process of performing switching between the at least two paths and an information reporting process associated with the switching process are authorized by a user and/or authorized by a network.

6. The method according to claim 1, wherein the method further comprises:
sending an identifier of a second terminal and/or a target network identifier to the network side device.

7. The method according to claim 2, wherein the performing switching between at least two paths comprises:
determining the target path based on whether the first terminal and the second terminal are in different cells; and
switching to the target path.

8. The method according to claim 7, wherein in a case that the target path is the third path, the performing switching between at least two paths comprises:
in a case that a first uplink channel corresponding to the first terminal meets a second condition, delegating the first uplink channel corresponding to the first terminal to the second terminal.

9. The method according to claim 8, wherein before the delegating the first uplink channel corresponding to the first terminal to the second terminal, the method further comprises:
sending first information to the network side device, wherein the first information comprises the second condition used to delegate the first uplink channel corresponding to the first terminal to the second terminal.

10. The method according to claim 8 or 9, wherein the second condition comprises at least the following:
a quantity of transmit bits is greater than a first predetermined value;
a power headroom report PHR is less than a second predetermined value;
information corresponding to a specific bearer is sent;
information corresponding to a specific logical channel is sent; and
uplink control information UCI is carried.

11. The method according to claim 8, wherein in a case that the first uplink channel corresponding to the first terminal is delegated to the second terminal, a value of a specified parameter corresponding to the first uplink channel is increased by a third predetermined value compared with sending by the first terminal, and the specified parameter is a minimum value in K1 and K2.

12. The method according to claim 2, wherein in a case of switching to the second path, the method further comprises at least one of the following:
monitoring a downlink scheduling service, and determining, based on specified information corresponding to the downlink scheduling service, whether the downlink scheduling service needs to be received and/or forwarded; and
monitoring an uplink service, and determining, based on a predetermined rule, whether the uplink service needs to be sent and/or forwarded.

13. The method according to claim 12, wherein the specified information comprises at least one of a radio network temporary identifier RNTI, a dedicated DCI field indication, and a specific bit combination in downlink control information DCI.

14. The method according to claim 2, wherein in a case of switching to the second path, the method further comprises:
receiving second indication information sent by the network side device, wherein the second indication information is used to indicate a receiving manner and/or a sending manner of transmitted data.

15. The method according to claim 7, wherein in a case of switching to the second path or the fifth path, the method further comprises:
in a case that the first terminal and the second terminal are located in a predetermined group or in a case that the network side device sends a DCI message in a single cell point to multipoint SC-PTM manner, monitoring a DCI message sent by the network side device to the second terminal.

16. The method according to claim 1, wherein the method further comprises:
sending second information to the network side device, wherein
the second information comprises at least one of the following:
an association relationship between the first terminal and a second terminal;
a network association manner used when the association relationship is implemented between the first terminal and the second terminal;
identifier information, wherein the identifier information is an identifier of a network and/or an identifier of a network device corresponding to the network association manner; and
a first measurement quantity corresponding to the target path.

17. The method according to claim 1, wherein the method further comprises:
receiving measurement configuration information sent by the network side device, wherein the measurement configuration comprises network identifier information and/or a second measurement quantity; and
reporting a measurement result, wherein the measurement result is obtained through measurement based on the measurement configuration information, and the path switching indication is determined by the network side device based on the measurement result.

18. The method according to claim 17, wherein the reporting a measurement result comprises at least one of the following:
reporting the measurement result through UCI on a layer 1;
reporting the measurement result through a Medium Access Control control element MAC CE on a layer 2;
reporting the measurement result through radio resource control RRC on a layer 3; and
reporting the measurement result through a non-access stratum NAS message.

19. A path switching method, wherein the method is performed by a network side device and comprises:
configuring and/or activating a target path in a case that a third condition is met, wherein
the third condition comprises any one of the following:
a path switching indication is sent to a first terminal, wherein the path switching indication is used to instruct the first terminal to switch between at least two paths;
a path switching request sent by the first terminal is received, wherein the path switching request is used to request the network side device to switch the first terminal between the at least two paths; and
a signal detection result reported by the first terminal is received, wherein the signal detection result is used to indicate a transmission parameter corresponding to the target path, wherein
the target path is one of the at least two paths, and the target path is a path corresponding to the path switching indication, the path switching request, or the signal detection result.

20. The method according to claim 19, wherein the path is any one of the following:
a first path used by the first terminal to transmit data to a second terminal;
a second path used by the first terminal to transmit data to the second terminal through the network side device;
a third path used by the second terminal to deputize for the first terminal to perform uplink transmission;
a fourth path comprising the first path and the second path, wherein in a case that both the first path and the second path are maintained, a connection corresponding to the first path or a connection corresponding to the second path is in a suspend state;
a fifth path used by the first terminal to transmit data to the network side device;
a sixth path used by the first terminal to transmit data to the network side device through the second terminal;
a seventh path used by the first terminal to forward data of the second terminal to the network side device;
an eighth path used by the first terminal to deputize for the second terminal to perform uplink transmission; and
a ninth path obtained after a sequence of the first terminal is exchanged with that of the second terminal in a specified path, wherein the specified path is one of the first path to the eighth path.

21. The method according to claim 19, wherein the path switching request comprises at least one of the following:
an identifier of a second terminal;
an identifier of a target bearer corresponding to the target path;
an identifier of a target network corresponding to the target path;
a target link on which path switching is initiated;
a reason for initiating path switching;
a transmission manner of the path switching request; and
first indication information used to indicate whether reporting of the path switching request is authorized by the network side device.

22. The method according to claim 19, wherein the configuring and/or activating a target path comprises at least one of the following:
associating the first terminal with a second terminal, and transmitting association information between network nodes corresponding to the first terminal and the second terminal;
identifying a target bearer, wherein the target bearer is a bearer corresponding to the target path; and
configuring same third information for the associated first terminal and the second terminal, wherein the third information comprises bearer information and/or a radio network temporary identifier RNTI.

23. The method according to claim 19, wherein after the configuring and/or activating a target path, the method further comprises:
sending second indication information to the first terminal, wherein the second indication information is used to indicate a receiving manner and/or a sending manner of transmitted data to the first terminal.

24. The method according to claim 19, wherein before the receiving a path switching request or a signal detection result sent by the first terminal, the method further comprises:
receiving an identifier of a second terminal and/or an identifier of a target network that are/is sent by the first terminal.

25. The method according to claim 19, wherein before the sending a path switching indication to a first terminal, the method further comprises:
receiving second information sent by the first terminal, wherein
the second information comprises at least one of the following:
an association relationship between the first terminal and a second terminal;
a network association manner used when the association relationship is implemented between the first terminal and the second terminal;
identifier information, wherein the identifier information is an identifier of a network and/or an identifier of a network device corresponding to the network association manner; and
a first measurement quantity corresponding to the target path.

26. The method according to claim 19, wherein before the sending a path switching indication to a first terminal, the method further comprises:
receiving first information, wherein the first information comprises a second condition used to delegate a first uplink channel corresponding to the first terminal to a second terminal.

27. The method according to claim 26, wherein the second condition comprises at least one of the following:
a quantity of transmit bits is greater than a first predetermined value;
a power headroom report PHR is less than a second predetermined value;
information corresponding to a specific bearer is sent;
information corresponding to a specific logical channel is sent; and
uplink control information UCI is carried.

28. The method according to claim 19, wherein before the sending a path switching indication to a first terminal, the method further comprises:
sending measurement configuration information to the first terminal, wherein the measurement configuration comprises network identifier information and/or a second measurement quantity; and
receiving a measurement result, wherein the measurement result is obtained by the first terminal through measurement based on the measurement configuration information, and the path switching indication is determined by the network side device based on the measurement result.

29. A path switching apparatus, wherein the apparatus comprises:
a switching module, configured to perform switching between at least two paths in a case that a first condition is met, wherein
the first condition comprises at least one of the following:
a path switching indication sent by a network side device is received, wherein the path switching indication is used to instruct a first terminal to switch between the at least two paths;
a path switching request is sent to the network side device, wherein the path switching request is used to request the network side device to switch the first terminal between the at least two paths;
a prescribed signal is detected, wherein the prescribed signal is a signal corresponding to a target path, and the target path is one of the at least two paths;
a signal detection result corresponding to the prescribed signal is reported; and
the signal detection result meets a predefined condition.

30. The apparatus according to claim 29, wherein the path is any one of the following:
a first path used by the first terminal to transmit data to a second terminal;
a second path used by the first terminal to transmit data to the second terminal through the network side device;
a third path used by the second terminal to deputize for the first terminal to perform uplink transmission;
a fourth path comprising the first path and the second path, wherein in a case that both the first path and the second path are maintained, a connection corresponding to the first path or a connection corresponding to the second path is in a suspend state;
a fifth path used by the first terminal to transmit data to the network side device;
a sixth path used by the first terminal to transmit data to the network side device through the second terminal;
a seventh path used by the first terminal to forward data of the second terminal to the network side device;
an eighth path used by the first terminal to deputize for the second terminal to perform uplink transmission; and
a ninth path obtained after a sequence of the first terminal is exchanged with that of the second terminal in a specified path, wherein the specified path is one of the first path to the eighth path.

31. The apparatus according to claim 29, wherein the path switching request comprises at least one of the following:
an identifier of a second terminal;
an identifier of a target bearer corresponding to the target path;
an identifier of a target network corresponding to the target path;
a target link on which path switching is initiated;
the target path;
a reason for initiating path switching;
a transmission manner of the path switching request; and
first indication information used to indicate whether reporting of the path switching request is authorized by the network side device.

32. The apparatus according to claim 29, wherein the apparatus further comprises:
a first sending module, configured to send an identifier of a second terminal and/or a target network identifier to the network side device.

33. The apparatus according to claim 30, wherein the switching module is configured to: determine the target path based on whether the first terminal and the second terminal are in different cells; and switch to the target path.

34. The apparatus according to claim 33, wherein the switching module is configured to: in a case that a first uplink channel corresponding to the first terminal meets a second condition, delegate the first uplink channel corresponding to the first terminal to the second terminal.

35. The apparatus according to claim 34, wherein the apparatus further comprises:
a second sending module, configured to send first information to the network side device, wherein the first information comprises the second condition used to delegate the first uplink channel corresponding to the first terminal to the second terminal.

36. The apparatus according to claim 29, wherein the apparatus further comprises:
a second receiving module, configured to: receive measurement configuration information sent by the network side device, wherein the measurement configuration comprises network identifier information and/or a second measurement quantity; and report a measurement result, wherein the measurement result is obtained through measurement based on the measurement configuration information, and the path switching indication is determined by the network side device based on the measurement result.

37. A path switching apparatus, wherein the apparatus comprises:
a configuration module, configured to configure and/or activate a target path in a case that a third condition is met, wherein
the third condition comprises any one of the following:
a path switching indication is sent to a first terminal, wherein the path switching indication is used to instruct the first terminal to switch between at least two paths;
a path switching request sent by the first terminal is received, wherein the path switching request is used to request a network side device to switch the first terminal between the at least two paths; and
a signal detection result reported by the first terminal is received, wherein the signal detection result is used to indicate a transmission parameter corresponding to the target path, wherein
the target path is one of the at least two paths, and the target path is a path corresponding to the path switching indication, the path switching request, or the signal detection result.

38. The apparatus according to claim 37, wherein the path is any one of the following:
a first path used by the first terminal to transmit data to a second terminal;
a second path used by the first terminal to transmit data to the second terminal through the network side device;
a third path used by the second terminal to deputize for the first terminal to perform uplink transmission;
a fourth path comprising the first path and the second path, wherein in a case that both the first path and the second path are maintained, a connection corresponding to the first path or a connection corresponding to the second path is in a suspend state;
a fifth path used by the first terminal to transmit data to the network side device;
a sixth path used by the first terminal to transmit data to the network side device through the second terminal;
a seventh path used by the first terminal to forward data of the second terminal to the network side device;
an eighth path used by the first terminal to deputize for the second terminal to perform uplink transmission; and
a ninth path obtained after a sequence of the first terminal is exchanged with that of the second terminal in a specified path, wherein the specified path is one of the first path to the eighth path.

39. The apparatus according to claim 37, wherein the path switching request comprises at least one of the following:
an identifier of a second terminal;
an identifier of a target bearer corresponding to the target path;
an identifier of a target network corresponding to the target path;
a target link on which path switching is initiated;
a reason for initiating path switching;
a transmission manner of the path switching request; and
first indication information used to indicate whether reporting of the path switching request is authorized by the network side device.

40. The apparatus of claim 37, wherein the configuration module is configured to:
associate the first terminal with a second terminal, and transmit association information between network nodes corresponding to the first terminal and the second terminal;
identify a target bearer, wherein the target bearer is a bearer corresponding to the target path; and
configure same third information for the associated first terminal and the second terminal, wherein the third information comprises bearer information and/or a radio network temporary identifier RNTI.

41. A terminal, comprising a processor, a memory, and a program or an instruction that is stored in the memory and that can be run on the processor, wherein when the program or the instruction is executed by the processor, the steps of the path switching method according to any one of claims 1 to 18 are implemented.

42. A network side device, comprising a processor, a memory, and a program or an instruction that is stored in the memory and that can be run on the processor, wherein when the program or the instruction is executed by the processor, the steps of the path switching method according to any one of claims 19 to 28 are implemented.

43. A readable storage medium, wherein the readable storage medium stores a program or an instruction, and when the program or the instruction is executed by a processor, the steps of the path switching method according to any one of claims 1 to 18 or the path switching method according to any one of claims 19 to 28 are implemented.
